# EUROPÄISCHE PATENTANMELDUNG

(11) **EP 1 225 321 A2**
(43) Veröffentlichungstag der Anmeldung: **24.07.2002**
(21) Anmeldenummer: 02000661.5
(22) Anmeldetag: 11.01.2002
(51) Int. Cl.: F02B 43/00, F02B 63/04

(54) **Mehrzylindrige stationäre Brennkraftmaschine**

(30) Priorität: 19.01.2001 AT 902001
(71) Anmelder: Jenbacher Aktiengesellschaft, 6200 Jenbach/Tirol (AT)
(72) Erfinder: Kraus, Markus, 6200 Jenbach (AT); Gruber, Friedrich, 6283 Hippach (AT)
(74) Vertreter: Torggler, Paul, Dr.

(57) **Zusammenfassung**

Mehrzylindrige stationäre Brennkraftmaschine (1) - insbesondere Gasmotor - zum Antrieb von mindestens einem Generator (3) zur Erzeugung von elektrischen Strom, wobei die Brennkraftmaschine (1) eine Steuerung (6) aufweist, die in Abhängigkeit von mindestens einem Steuersignal während des Betriebs selektiv ein oder mehrere Zylinder abschaltet.

## Beschreibung

Die vorliegende Erfindung betrifft eine mehrzylindrige stationäre Brennkraftmaschine - insbesondere Gasmotor - zum Antrieb von mindestens einem Generator zur Erzeugung von elektrischem Strom.

Stationäre Brennkraftmaschinen, welche zum Antrieb von Generatoren verwendet werden, sind beim Stand der Technik bekannt. Durch plötzliche Lastabschaltung am Generator während des Betriebes der Brennkraftmaschine kann es leicht zu Überhöhung der Drehzahl der Brennkraftmaschine kommen. Ähnliches gilt für das Abkoppeln der Brennkraftmaschine vom Generator oder andere plötzliche Änderungen der Betriebszustände. Diese Laständerungen werden beim Stand der Technik im Extremfall durch eine Überdrehzahlabschaltung der Brennkraftmaschine abgefangen, was jedoch einen unerwünscht abrupten Eingriff in den Betrieb der Brennkraftmaschine nach sich zieht. Generell ist das an die Stärke der Änderung angepaßte Regulieren der Drehzahl einer stationären Brennkraftmaschine bei plötzlichem Lastabfall in dem Generator, welchen sie antreibt, noch ungenügend gelöst.

Aufgabe der Erfindung ist es somit, bei stationären Brennkraftmaschinen eine Möglichkeit zu schaffen, überhöhte Drehzahlen der Brennkraftmaschine bei plötzlichen Änderungen der Betriebszustände der Brennkraftmaschine zu verhindern.

Dies wird erfindungsgemäß dadurch erreicht, daß die Brennkraftmaschine eine Steuereinrichtung aufweist, die in Abhängigkeit von mindestens einem Steuersignal während des Betriebs selektiv ein oder mehrere Zylinder abschaltet.

Bei mobilen Brennkraftmaschinen, welche z.B. Kraftfahrzeuge oder ähnliches antreiben, ist es zwar bekannt, zur Regulierung der Betriebszustände der mobilen Brennkraftmaschine einen oder mehrere Zylinder selektiv abzuschalten. Bei mobilen Brennkraftmaschinen sind jedoch generell andere Betriebszustände und Zustandsänderung abzufangen und zu regulieren.

So wird die zylinderselektive Abschaltung hier im speziellen oft zur Treibstoffersparnis bei mobilen Brennkraftmaschinen in z.B. Pkws mit vielen Zylindern oder zur Schlupfregelung verwendet.

Die zylinderselektive Abschaltung wird erfindungsgemäß vor allem zur Vermeidung der Überdrehzahlabschaltung im Vollastbetrieb verwendet. Hierbei wird unter dem Begriff Abschalten verstanden, daß durch das Abschalten Zylinder nicht mehr aktiv arbeiten, sondern der in Ihnen befindliche Kolben nur passiv mitläuft. Dies kann auf verschiedene Art und Weise erreicht werden. Z.B. durch Aussetzen der Brennstoffzufuhr in den Zylinder oder durch Ausschalten der Zündung des Zylinders. Hierbei muß die Abschaltung der Zylinder der jeweiligen Situation angepaßt werden, damit wie folgt erläuterte Kriterien erfüllt sind. Zunächst ist die Vermeidung der Überdrehzahl ohne das vollständige Abstellen der Brennkraftmaschine hierzu zu nennen. Des weiteren erreicht die Brennkraftmaschine durch die Verwendung der erfindungsgemäßen selektiven Abschaltung einzelner oder mehrerer Zylinder nach dem Lastabwurf möglichst schnell wieder die geforderte Nenndrehzahl. Durch die zylinderselektive Abschaltung unter Verwendung einer geeigneten Steuereinrichtung wird gleichzeitig dabei garantiert, daß keine Überlastung für die anderen noch in Betrieb stehenden Zylinder auftritt.

Eine bevorzugte Ausführungsform sieht vor, daß das Steuersignal für die Zylinderabschaltung abhängig von der Last am Generator ist. Bei stationären Brennkraftmaschinen ist die Last am Generator ein wichtiger Einflußparameter, welcher die von der Brennkraftmaschine abzugebende Leistung bestimmt. Tritt eine plötzliche Lastverringerung am Generator auf, so würde die Brennkraftmaschine ohne den erfindungsgemäßen Eingriff die Drehzahl schlagartig erhöhen, was ohne einen steuernden Eingriff zur Schädigung bzw. zur Zerstörung der Brennkraftmaschine führen könnte. Durch die erfindungsgemäße selektive Abschaltung einzelner oder mehrere Zylinder, der den Generator antreibenden Brennkraftmaschine in Abhängigkeit der Last am Generator werden solche unerwünschten Überhöhungen der Drehzahl abgeregelt und verhindert. Die Energie, welche bei einem plötzlichem Lastabwurf auftritt und zu einer Drehzahlerhöhung beim Abschalten der Verbraucher führen würde, wird durch das Abschalten eines oder mehrere Zylinder abgebaut. Vor allem beim Lastabwurf im Vollastbetrieb kann so eine Überdrehzahl verhindert werden.

Eine bevorzugte erfindungsgemäße Variante sieht vor, daß die Zylinderabschaltung an mindestens einem Zylinder durch Abschalten der jeweiligen Zündung erfolgt. Hierbei kann z.B. bei einer frei einstellbaren Anzahl von Zylindern die Zündung für eine frei einstellbare Zeit abgeschaltet werden. Hierbei ist es für eine möglichst geringe Drehzahlüberhöhung wichtig, möglichst früh die Zündung an einigen Zylindern abzuschalten.

Eine weitere bevorzugte Ausführungsform der erfindungsgemäßen Brennkraftmaschine sieht vor, daß sie einen Generatorschalter zum An- und Abkuppeln des Generators an bzw. von mindestens einen Verbraucher aufweist, wobei der Generatorschalter beim Abkuppeln des Generators ein Steuersignal zur Zylinderabschaltung auslöst.

Eine andere erfindungsgemäße Variante sieht vor, daß eine Brennkraftmaschine mit einer mechanischen oder hydraulischen Kupplung zum Generator und einer Einrichtung zur Überwachung des Kupplungszustandes ausgerüstet ist, wobei die Einrichtung zur Überwachung des Kupplungszustandes beim Öffnen der Kupplung ein Steuersignal zur Zylinderabschaltung auslöst.

Alternativ hierzu ist auch erfindungsgemäß vorgesehen, daß eine Brennkraftmaschine mit einer Steuereinrichtung, welche mit einer Einrichtung zur - insbesondere elektrischen oder mechanischen - Messung der Laständerung am Generator korrespondiert, ausgerüstet ist, wobei die Einrichtung zur Messung der Laständerung ein Steuersignal zur Zylinderabschaltung auslöst. Hierdurch kann z.B. bei einem Lastabfall die Zylinderabschaltung aktiviert und dadurch eine Überdrehzahlabschaltung der Brennkraftmaschine verhindert werden.

Eine bevorzugte Ausführungsform sieht des weiteren vor, daß die Brennkraftmaschine eine Steuerung zur Verhinderung von Verpuffungen bei der Zylinderabschaltung aufweist. Hierbei kann erfindungsgemäß die Anzahl der Zylinder so gewählt werden, daß das Gemisch zwischen verbranntem und unverbranntem Abgas im Abgastrakt unterhalb der Zündgrenze bleibt. Ist dies gegeben, so entstehen im Abgastrakt keine Verpuffungen, welche zur teilweisen Beschädigung oder zur Zerstörung der Brennkraftmaschine führen könnten.

Konstruktiv besonders günstig ist es, daß die Brennkraftmaschine eine Steuerung aufweist, wobei die Steuerung die Anzahl der abzuschaltenden Zylinder in Abhängigkeit der Amplitude und/oder dem zeitlichen Verlauf der - vorzugsweise elektrisch oder mechanisch -gemessenen Laständerung bestimmt. Hierbei ist sowohl die Anpassung der Anzahl der abzuschaltenden Zylinder an die Laständerung als auch die Verteilung dieser Zylinder auf die gesamte Brennkraftmaschine wichtig.

Eine weitere erfindungsgemäße Ausführungsform sieht vor, daß die Brennkraftmaschine eine Steuerung aufweist, welche den zeitlichen Ablauf der Abschaltung in Abhängigkeit der Amplitude und/oder des zeitlichen Verlaufs der - vorzugsweise elektrischen oder mechanisch - gemessenen Laständerung bestimmt. Durch diese Anpassung der Abschaltzeitpunkte von einzelnen oder mehreren Zylindern wird ein abruptes Eingreifen der Steuerung in die Betriebszustände der Brennkraftmaschine verhindert und eine gedämpfte, an die momentane Last an der Brennkraftmaschine angepaßte Steuerung erreicht.

Im Anschluß an das Abschalten eines oder mehrerer Zylinder kann der Zeitpunkt für das Wiedereinschalten der oder des Zylinders durch eine Zeit oder ein Ereignis festgelegt werden. So sieht zum einen eine erfindungsgemäße Ausführungsvariante vor, daß die Brennkraftmaschine eine Steuerung aufweist, wobei diese Steuerung die Wiedereinschaltung der abgeschalteten Zylinder nach dem Ablauf einer gewissen Zeit vornimmt. Alternativ ist erfindungsgemäß vorgesehen, daß die Brennkraftmaschine eine Steuerung aufweist, wobei die Steuerung das Wiedereinschalten der abgeschalteten Zylinder in Abhängigkeit eines vorzugsweise am Generator und/oder an der Brennkraftmaschine gemessenen Steuersignals vornimmt. Hierbei sieht eine besonders bevorzugte Ausführungsform der Erfindung vor, daß die Brennkraftmaschine eine Steuerung aufweist, welche das Wiedereinschalten der abgeschalteten Zylinder in Abhängigkeit der -vorzugsweise elektrisch und/oder mechanisch am Generator gemessenen - Laständerung vornimmt.

Weitere Merkmale und Einzelheiten der vorliegenden Erfindung ergeben sich aus der nachfolgenden Figurenbeschreibung. Dabei zeigt:

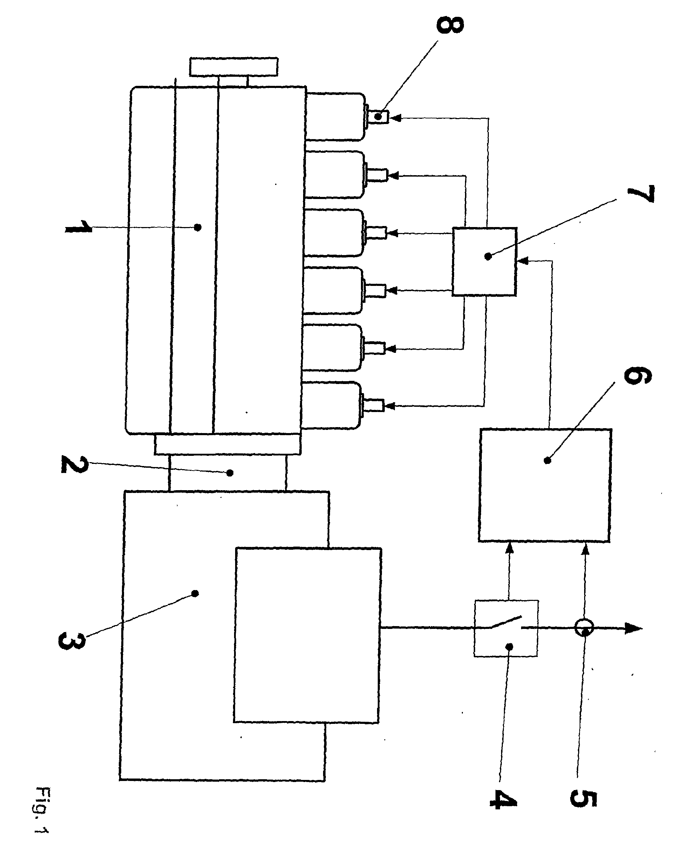

Fig. 1 einen schematischen Aufbau aus Brennkraftmaschine und Generator mit entsprechenden Meß- und Steuereinrichtungen.

In Fig. 1 ist die Brennkraftmaschine 1 über die Kupplung 2 mit dem Generator 3 verbunden. Der Generator 3 ist über den Generatorschalter 4 mit mindestens einem Verbraucher verbunden. In der zugehörigen Verbindungsleitung ist ein Leistungsmesser 5 vorgesehen, welcher die Leistungs- und damit die Laständerung am Generator mißt. In Fig. 1 geben sowohl der Leistungsmesser 5 als auch der Generatorschalter 4 Steuersignale an die Steuereinrichtung 6 ab. Diese ist mit der Zündung 7 verbunden, welche die Zündspulen 8 für die einzelnen Zylinder selektiv anund abschalten kann. Durch diese erfindungsgemäße Anordnung kann bei plötzlicher Laständerung oder beim Öffnen des Generatorschalters ein oder mehrere Zylinder durch die Steuerung 6 abgeschaltet und nach einer Lastanpassung oder einer vorher festgelegten Zeit wieder eingeschaltet werden.

## Patentansprüche

1. Mehrzylindrige stationäre Brennkraftmaschine - insbesondere Gasmotor - zum Antrieb von mindestens einem Generator zur Erzeugung von elektrischem Strom, **dadurch gekennzeichnet, daß** die Brennkraftmaschine (1) eine Steuereinrichtung (6) aufweist, die in Abhängigkeit von mindestens einem Steuersignal während des Betriebs selektiv einen oder mehrere Zylinder abschaltet.

2. Brennkraftmaschine nach Anspruch 1, **dadurch gekennzeichnet, daß** das Steuersignal für die Zylinderabschaltung abhängig von der Last am Generator (3) ist.

3. Brennkraftmaschine nach einem der Ansprüche 1 oder 2, **dadurch gekennzeichnet, daß** die Zylinderabschaltung an mindestens einem Zylinder durch Ausschalten der jeweiligen Zündung (8) erfolgt.

4. Brennkraftmaschine mit einem Generatorschalter zum An- und Abkoppeln des Generators an bzw. von mindestens einen Verbraucher nach einem der Ansprüche 1 bis 3, **dadurch gekennzeichnet, daß** der Generatorschalter (4) beim Abkoppeln des Generators ein Steuersignal zur Zylinderabschaltung auslöst.

5. Brennkraftmaschine mit einer mechanischen oder hydraulischen Kupplung zum Generator und einer Einrichtung zur Überwachung des Kupplungszustandes nach einem der Ansprüche 1 bis 4, **dadurch gekennzeichnet, daß** die Einrichtung zur Überwachung des Kupplungszustandes beim Öffnen der Kupplung (2) ein Steuersignal zur Zylinderabschaltung auslöst.

6. Brennkraftmaschine mit einer Steuereinrichtung, welche mit einer Einrichtung zur - insbesondere elektrischen oder mechanischen - Messung der Laständerung am Generator korrespondiert, nach einem der Ansprüche 1 bis 5, **dadurch gekennzeichnet, daß** die Einrichtung (5) zur Messung des Laständerung ein Steuersignal zur Zylinderabschaltung auslöst.

7. Brennkraftmaschine nach einem der Ansprüche 1 bis 6, **dadurch gekennzeichnet, daß** die Brennkraftmaschine (1) eine Steuerung (6) zur Verhinderung von Verpuffung bei der Zylinderabschaltung aufweist.

8. Brennkraftmaschine nach einem der Ansprüche 1 bis 7, **dadurch gekennzeichnet, daß** die Brennkraftmaschine (1) eine Steuerung (6) aufweist, wobei die Steuerung (6) die Anzahl der abzuschaltenen Zylinder in Abhängigkeit der Amplitude und/oder dem zeitlichen Verlauf der - vorzugsweise elektrisch oder mechanisch gemessenen - Laständerung bestimmt.

9. Brennkraftmaschine nach einem der Ansprüche 1 bis 8, **dadurch gekennzeichnet, daß** die Brennkraftmaschine (1) eine Steuerung (6) aufweist, welche den zeitlichen Ablauf der Abschaltung in Abhängigkeit der Amplitude und/oder dem zeitlichen Verlauf der - vorzugsweise elektrisch oder mechanisch gemessenen - Laständerung bestimmt.

10. Brennkraftmaschine nach einem der Ansprüche 1 bis 9, **dadurch gekennzeichnet, daß** die Brennkraftmaschine (1) eine Steuerung (6) aufweist, wobei diese Steuerung (6) die Wiedereinschaltung der abgeschalteten Zylinder nach dem Ablauf einer gewissen Zeit vornimmt.

11. Brennkraftmaschine nach einem der Ansprüche 1 bis 10, **dadurch gekennzeichnet, daß** die Brennkraftmaschine (1) eine Steuerung (6) aufweist, wobei diese Steuerung (6) das Wiedereinschalten der abgeschalteten Zylinder in Abhängigkeit eines - vorzugsweise am Generator und/oder an der Brennkraftmaschine gemessenen - Steuersignals vornimmt.

12. Brennkraftmaschine nach einem der Ansprüche 1 bis 9, **dadurch gekennzeichnet, daß** die Brennkraftmaschine (1) eine Steuerung (6) aufweist, welche das Wiedereinschalten der abgeschalteten Zylinder in Abhängigkeit der - vorzugsweise elektrisch und/oder mechanisch am Generator gemessenen - Laständerung vornimmt.
